# EUROPEAN PATENT APPLICATION

(11) **EP 4 621 437 A1**
(43) Date of publication of application: **24.09.2025**
(21) Application number: 22966908.0
(22) Date of filing: 01.12.2022
(51) Int. Cl.: G01S 7/40

(54) **ANTENNA APPARATUS, RADAR, TERMINAL DEVICE, AND VEHICLE END**

(71) Applicant: Shenzhen Yinwang Intelligent Technologies Co., Ltd., Shenzhen, Guangdong 518129 (CN)
(72) Inventor: SUN, Zhu, Shenzhen, Guangdong 518129 (CN); JIANG, Wei, Shenzhen, Guangdong 518129 (CN); LI, Haowei, Shenzhen, Guangdong 518129 (CN); TEJERO ALFAGEME, Simon, Shenzhen, Guangdong 518129 (CN)
(74) Representative: Maiwald GmbH
(86) International application number: PCT/CN2022/135970
(87) International publication number: WO 2024/113319

(57) **Abstract**

This application discloses an antenna apparatus, a radar, a terminal device, and a vehicle, and relates to the field of millimeter-wave radar technologies. The antenna apparatus includes a first radio frequency controller, a second radio frequency controller, and a delay unit. The first radio frequency controller is configured to generate a first signal, and the first radio frequency controller includes at least one first transmit port and/or at least one first receive port. The second radio frequency controller is configured to generate a second signal, and the second radio frequency controller includes at least one second transmit port and/or at least one second receive port. A first calibration signal corresponding to the first signal is separately transmitted to the first receive port and the second receive port through the delay unit. A second calibration signal corresponding to the second signal is separately transmitted to the first receive port and the second receive port through the delay unit. The delay unit is configured to delay transmission of the first calibration signal and the second calibration signal. The antenna apparatus may support a requirement for channel calibration between different chips.

## Description

### TECHNICAL FIELD

This application relates to the field of millimeter-wave radar technologies, and in particular, to an antenna apparatus, a radar, a terminal device, and a vehicle.

### BACKGROUND

A millimeter-wave radar is a radar that operates in a millimeter-wave band for detection. The millimeter-wave radar measures information such as a distance, a speed, and an orientation (angle) of a target by transmitting an electromagnetic wave signal and listening to, from an environment, a reflected signal of the electromagnetic wave signal reflected by the target.

Currently, to enable a millimeter-wave radar to maintain long-term reliable and highprecision operation, a radar module needs to calibrate an amplitude/a phase drift of a radar service channel (which is mainly an active component) by using a highly stable internal calibration network, so that amplitude/phase consistency of the channel is always maintained within an acceptable range. A working principle of the internal calibration network is as follows: After calibration signals of service channels are separately tapped, looped back, and sampled, loopback signals of the channels are compared, correction coefficients are extracted, and then compensation is performed by using a digital domain or an analog device, to implement amplitude/phase alignment of a plurality of channels of an array antenna of the millimeter-wave radar.

However, a dedicated calibration channel is required during calibration by a current calibration network. This limits selection of a radio frequency chip. As a result, a requirement for channel calibration between different chips cannot be supported.

### SUMMARY

Embodiments of this application provide an antenna apparatus, a radar, a terminal device, and a vehicle, to support a requirement for channel calibration between different chips.

According to a first aspect, an embodiment of this application provides an antenna apparatus, including:
a first radio frequency controller, a second radio frequency controller, and a delay unit, where
the first radio frequency controller is configured to generate a first signal, where the first radio frequency controller includes at least one first transmit port and/or at least one first receive port;
the second radio frequency controller is configured to generate a second signal, where the second radio frequency controller includes at least one second transmit port and/or at least one second receive port;
a first radio frequency signal corresponding to the first signal is transmitted to an air interface through an antenna corresponding to the first transmit port, where the first radio frequency signal is used to detect a target;
a first calibration signal corresponding to the first signal is separately transmitted to the first receive port and the second receive port through the delay unit;
a second radio frequency signal corresponding to the second signal is transmitted to an air interface through an antenna corresponding to the second transmit port, where the second radio frequency signal is used to detect the target;
a second calibration signal corresponding to the second signal is separately transmitted to the first receive port and the second receive port through the delay unit; and
the delay unit is configured to delay transmission of the first calibration signal and the second calibration signal.

In an embodiment of this application, the antenna apparatus is provided. The first radio frequency controller in the antenna apparatus generates the first signal, where the first radio frequency signal corresponding to the first signal is transmitted to the air interface through the antenna corresponding to the first transmit port of the first radio frequency controller, to detect the target; and the first calibration signal corresponding to the first signal is separately transmitted to receive ports of radio frequency controllers (including but not limited to the first radio frequency controller) in the antenna apparatus through the delay unit in the antenna apparatus, and a transmission delay is generated when the first calibration signal passes through the delay unit. Similarly, the second radio frequency controller in the antenna apparatus generates the second signal, where the second radio frequency signal corresponding to the second signal is transmitted to the air interface through the antenna corresponding to the second transmit port of the second radio frequency controller, to detect the target; and the second calibration signal corresponding to the second signal is separately transmitted to the receive ports of the radio frequency controllers (including but not limited to the second radio frequency controller) in the antenna apparatus through the delay unit in the antenna apparatus, and a transmission delay is generated when the second calibration signal passes through the delay unit.

According to embodiments of this application, intra-system calibration may be implemented by multiplexing a service transmit channel and a service receive channel of each radio frequency controller for loopback transmission of a calibration signal, without depending on a dedicated calibration channel, so that a requirement for channel calibration between different chips can be supported. In addition, the delay unit is designed to delay transmission of each calibration signal, so that a looped-back calibration signal is distinguished from leakage energy between the service transmit channel and the service receive channel in terms of time, thereby reducing a requirement for isolation between the service transmit channel and the service receive channel, and implementing a compact design and high reliability of the apparatus.

In a possible implementation, the delay unit includes at least one of the following: a serpentine waveguide and a cascaded resonant cavity.

In implementations of this application, a possible specific implementation of the delay unit is provided. Specifically, the delay unit may include but is not limited to a module or a component that is configured to delay transmission of each calibration signal in the calibration system, like the serpentine waveguide or the cascaded resonant cavity. The serpentine waveguide is a waveguide with a meandered transmission channel (similar to a snake shape), and the cascaded resonant cavities may be a plurality of resonant cavities connected in a snake shape. According to embodiments of this application, a transmission delay is generated when each calibration signal passes through the delay unit, so that the looped-back calibration signal is distinguished from leakage energy between a service transmit channel and a service receive channel in terms of time, thereby improving a signal to interference plus noise ratio (signal to interference plus noise ratio, SINR) of the looped-back calibration signal, reducing a requirement for isolation between the service transmit channel and the service receive channel, and implementing a compact design and high reliability of the apparatus.

In a possible implementation, the antenna apparatus further includes:
a first coupler and a second coupler, where
the first coupler is disposed on a transmit channel of the first radio frequency controller, and the second coupler is disposed on a transmit channel of the second radio frequency controller;
the first coupler is configured to tap the first calibration signal from the first signal, where a signal left after tapping of the first signal is the first radio frequency signal; and
the second coupler is configured to tap the second calibration signal from the second signal, where a signal left after tapping of the second signal is the second radio frequency signal.

In implementations of this application, a possible specific implementation of the antenna apparatus is further provided. Specifically, the antenna apparatus further includes the first coupler and the second coupler. The first coupler is disposed on the transmit channel of the first radio frequency controller, and is configured to tap the first calibration signal from the first signal generated by the first radio frequency controller, and the signal left after tapping of the first signal is the first radio frequency signal transmitted to the air interface. It may be understood that an energy proportion of the first calibration signal tapped from the first signal is far lower than an energy proportion of the first radio frequency signal, so that the antenna apparatus can implement system calibration without affecting a normal detection function. Similarly, the second coupler is disposed on the transmit channel of the second radio frequency controller, and is configured to tap the second calibration signal from the second signal generated by the second radio frequency controller, and the signal left after tapping of the second signal is the second radio frequency signal transmitted to the air interface. It may be understood that an energy proportion of the second calibration signal tapped from the second signal is far lower than an energy proportion of the second radio frequency signal, so that the antenna apparatus can implement system calibration without affecting a normal detection function. Similarly, a coupler may further be disposed on a transmit channel of another radio frequency controller in the antenna apparatus, to implement a function similar to functions of the first coupler and the second coupler. According to embodiments of this application, the coupler is used to tap some energy from a service transmit channel as a calibration signal for loopback transmission, and a service transmit channel and a service receive channel of each radio frequency controller is multiplexed, without depending on a dedicated calibration channel, so that a requirement for channel calibration between different chips can be supported.

In a possible implementation, the antenna apparatus further includes:
a third coupler and a fourth coupler, where
the third coupler is disposed on a receive channel of the first radio frequency controller, and the fourth coupler is disposed on a receive channel of the second radio frequency controller;
the third coupler is configured to couple the first calibration signal and the second calibration signal to the first radio frequency controller; and
the fourth coupler is configured to couple the first calibration signal and the second calibration signal to the second radio frequency controller.

In implementations of this application, a possible specific implementation of the antenna apparatus is further provided. Specifically, the antenna apparatus further includes the third coupler and the fourth coupler. The third coupler is disposed on the receive channel of the first radio frequency controller, and is configured to couple the calibration signals (including but not limited to the first calibration signal and the second calibration signal) in the system to the first radio frequency controller. Similarly, the fourth coupler is disposed on the receive channel of the second radio frequency controller, and is configured to couple the calibration signals (including but not limited to the first calibration signal and the second calibration signal) in the system to the second radio frequency controller. Similarly, a coupler may further be disposed on a receive channel of another radio frequency controller in the antenna apparatus, to implement a function similar to functions of the third coupler and the fourth coupler. According to embodiments of this application, calibration signals are coupled to corresponding radio frequency controllers by using a coupler, to implement loopback transmission of each calibration signal in the system, thereby implementing intra-system calibration.

In a possible implementation, the first coupler and/or the second coupler and/or the third coupler and/or the fourth coupler include/includes at least one of the following: a small-aperture directional coupler and a cross-slot coupler.

In implementations of this application, a possible specific implementation of the coupler is provided. Specifically, the first coupler, the second coupler, the third coupler, and the fourth coupler may include but are not limited to a module or a component configured to tap a signal or couple a signal, for example, the small-aperture directional coupler or the cross-slot coupler. According to embodiments of this application, various types of couplers may tap some energy from the service transmit channel as a calibration signal for loopback transmission, and couple calibration signals to corresponding radio frequency controllers, to implement loopback transmission of each calibration signal in the system, thereby implementing intra-system calibration.

In a possible implementation, the antenna apparatus further includes:
a combiner and a divider, where
the combiner is configured to combine the first calibration signal and the second calibration signal to the delay unit; and
the divider is configured to: divide the first calibration signal that passes through the delay unit to the first receive port and the second receive port, and divide the second calibration signal that passes through the delay unit to the first receive port and the second receive port.

In implementations of this application, a possible specific implementation of the antenna apparatus is further provided. Specifically, the antenna apparatus further includes the combiner and the divider. The combiner is configured to combine the calibration signals (including but not limited to the first calibration signal and the second calibration signal) in the system to the delay unit, to delay transmission of the calibration signals. The divider is configured to divide the calibration signals (including but not limited to the first calibration signal and the second calibration signal) in the system to the radio frequency controllers. According to embodiments of this application, loopback transmission of each calibration signal in the system can be implemented, thereby implementing intra-system calibration.

In a possible implementation, the first calibration signal and the second calibration signal that pass through the combiner are a time division signal, a frequency division signal, or a code division signal.

In implementations of this application, the calibration signal that passes through the combiner is the time division signal, the frequency division signal, or the code division signal. It may be understood that when each calibration signal passes through the combiner, the calibration signal may be transmitted in a time division manner, a frequency division manner, or a code division manner, to ensure isolation of the calibration signal on each branch channel.

In a possible implementation, the combiner and/or the divider include/includes at least one of the following: a waveguide bridge and a serial feeding coupler.

In implementations of this application, a possible specific implementation of the combiner and the divider is provided. Specifically, the combiner and the divider may include but are not limited to a module or a device configured to combine signals or divide a signal, for example, the waveguide bridge and the serial feeding coupler. The waveguide bridge may also be referred to as a hybrid junction or a hybrid joint. According to embodiments of this application, various types of combiners and dividers may be used to implement loopback transmission of each calibration signal in the system.

In a possible implementation, the first radio frequency controller and/or the second radio frequency controller include/includes a monolithic microwave integrated circuit MMIC.

In implementations of this application, the radio frequency controller in the antenna apparatus may include the monolithic microwave integrated circuit (monolithic microwave integrated circuit, MMIC).

In a possible implementation, the antenna apparatus includes a plurality of first radio frequency controllers and/or a plurality of second radio frequency controllers.

In implementations of this application, a possible specific implementation of the antenna apparatus is further provided. Specifically, the antenna apparatus further includes a plurality of radio frequency controllers, and the plurality of radio frequency controllers may implement functions similar to those of the first radio frequency controller and/or the second radio frequency controller, to implement intra-system calibration.

In a possible implementation, an arrival time of the first calibration signal is different from an arrival time of leakage energy corresponding to the first signal at the receive port, and an arrival time of the second calibration signal is different from an arrival time of leakage energy corresponding to the second signal at the receive port.

In implementations of this application, the first calibration signal and the leakage energy corresponding to the first signal have different arrival times at receive ports of radio frequency controllers, so that the first calibration signal and the leakage energy corresponding to the first signal are distinguished in terms of time, thereby improving an SINR of the first calibration signal. Similarly, the second calibration signal and the leakage energy corresponding to the second signal have different arrival times at receive ports of radio frequency controllers, so that the second calibration signal and the leakage energy corresponding to the second signal are distinguished in terms of time, thereby improving an SINR of the second calibration signal. It may be understood that the first calibration signal and the leakage energy corresponding to the second signal have different arrival times at receive ports of radio frequency controllers, so that the first calibration signal and the leakage energy corresponding to the second signal are distinguished in terms of time, thereby improving the SINR of the first calibration signal; and the second calibration signal and the leakage energy corresponding to the first signal have different arrival times at receive ports of radio frequency controllers, so that the second calibration signal and the leakage energy corresponding to the first signal are distinguished in terms of time, thereby improving the SINR of the second calibration signal. According to embodiments of this application, a calibration signal and leakage energy corresponding to a service signal are distinguished at receive ports of radio frequency controllers, so that a requirement for isolation between a service transmit channel and a service receive channel can be reduced, and a compact design and high reliability of the apparatus can be implemented.

In a possible implementation, the antenna apparatus further includes a processing unit, where
the processing unit is configured to obtain a target transmit parameter based on a transmit parameter of the first calibration signal and a transmit parameter of the second calibration signal, where the target transmit parameter includes a target amplitude and/or a target phase of a signal; and
the processing unit is further configured to: based on the target transmit parameter, scale an amplitude of the first calibration signal and an amplitude of the second calibration signal to the target amplitude, and/or align a phase of the first calibration signal and a phase of the second calibration signal with the target phase.

In implementations of this application, a possible specific implementation of the antenna apparatus is further provided. Specifically, the antenna apparatus further includes the processing unit. The processing unit is configured to obtain the target transmit parameter based on transmit parameters of calibration signals (including but not limited to the first calibration signal and the second calibration signal). The target transmit parameter includes but is not limited to information such as a target amplitude and a target phase of the signal. The processing unit then aligns the transmit parameters of the calibration signals (including but not limited to the first calibration signal and the second calibration signal) with the target transmit parameter, for example, scales the amplitude of the first calibration signal and the amplitude of the second calibration signal to the target amplitude, and aligns the phase of the first calibration signal and the phase of the second calibration signal with the target phase. Obtaining the target transmit parameter based on the transmit parameters of the calibration signals may be using an average value/median value/mode value of the transmit parameters of the calibration signals as the target transmit parameter, or may be using a transmit parameter of one of the calibration signals as the target transmit parameter, or the like. According to embodiments of this application, intra-system calibration may be implemented by using a calibration signal transmitted in a loopback manner on a service channel of each radio frequency controller, without depending on a dedicated calibration channel, so that a requirement for channel calibration between different chips can be supported.

According to a second aspect, an embodiment of this application provides a chip, where the chip includes the antenna apparatus according to the first aspect or any one of the possible implementations of the first aspect.

According to a third aspect, an embodiment of this application provides a radar or a radar system, where the radar or the radar system includes the antenna apparatus according to the first aspect or any one of the possible implementations of the first aspect, or includes the chip according to the second aspect. It should be noted that there may be a plurality of smart sensors integrated with sensors. When the smart sensor includes a millimeter-wave detection function, the smart sensor may also be referred to as a millimeter-wave radar or a millimeter-wave radar system.

According to a fourth aspect, an embodiment of this application provides a terminal device, where the terminal device includes the antenna apparatus according to the first aspect or any one of the possible implementations of the first aspect, or includes the chip according to the second aspect, or includes the radar or the radar system according to the third aspect.

According to a fifth aspect, an embodiment of this application provides a vehicle, where the vehicle includes the antenna apparatus according to the first aspect or any one of the possible implementations of the first aspect, or includes the chip according to the second aspect, or includes the radar or the radar system according to the third aspect, or includes the terminal device according to the fourth aspect.

In embodiments of this application, a service transmit channel and a service receive channel of each radio frequency controller is multiplexed for loopback transmission of a calibration signal, to implement intra-system calibration without depending on a dedicated calibration channel, thereby supporting a requirement for channel calibration between different chips. In addition, the delay unit is used to delay transmission of each calibration signal, so that the looped-back calibration signal is distinguished from leakage energy between the service transmit channel and the service receive channel in terms of time, thereby reducing a requirement for isolation between the service transmit channel and the service receive channel, and implementing a compact design and high reliability of the apparatus.

### BRIEF DESCRIPTION OF DRAWINGS

To describe the technical solutions in embodiments of this application more clearly, the following briefly describes the accompanying drawings for describing embodiments in this application. It is clear that the accompanying drawings in the following description show merely some embodiments of this application, and a person of ordinary skill in the art may derive other drawings from these accompanying drawings without creative efforts.
FIG. 1 is a diagram of radar distribution according to an embodiment of this application;
FIG. 2 is a diagram of an architecture of a radar according to an embodiment of this application;
FIG. 3 is a diagram of an architecture of a radar according to an embodiment of this application;
FIG. 4 is a diagram of a structure of an antenna apparatus according to an embodiment of this application;
FIG. 5A is a diagram of a structure of a delay apparatus according to an embodiment of this application;
FIG. 5B is a diagram of a structure of a delay apparatus according to an embodiment of this application;
FIG. 6 is a diagram of a structure of an antenna apparatus according to an embodiment of this application;
FIG. 7 is a diagram of a structure of an antenna apparatus according to an embodiment of this application;
FIG. 8 is a diagram of a structure of an antenna apparatus according to an embodiment of this application;
FIG. 9 is a diagram of a structure of an antenna apparatus according to an embodiment of this application;
FIG. 10 is a diagram of a structure of an antenna apparatus according to an embodiment of this application;
FIG. 11 is a diagram of a structure of an antenna apparatus according to an embodiment of this application;
FIG. 12 is a diagram of a structure of an antenna apparatus according to an embodiment of this application;
FIG. 13 is a diagram of a structure of an antenna apparatus according to an embodiment of this application;
FIG. 14 is a diagram of a structure of an antenna apparatus according to an embodiment of this application; and
FIG. 15 is a diagram of a structure of an antenna apparatus according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various positions in the specification may not necessarily refer to a same embodiment, and is not an independent or optional embodiment exclusive from another embodiment. It may be understood explicitly and implicitly by a person skilled in the art that embodiments described herein may be combined with other embodiments.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

As described in the background, a dedicated calibration channel is required during calibration by a current calibration network, which limits selection of a radio frequency chip. As a result, a requirement for channel calibration between different chips cannot be supported. This application provides an antenna apparatus, a radar, a terminal device, and a vehicle, and relates to the field of millimeter-wave radar technologies, to support a requirement for channel calibration between different chips.

To describe the solutions of this application more clearly, the following first describes some knowledge related to a radar.

The radar is a transliterated name of the Radar in English, and is short for radio detection and ranging, that is, radio detection and ranging. The radar is used to discover a target and determine a spatial position of the target by using a radio method.

A detection medium of the radar is an electromagnetic wave, and the radar implements detection of a target, for example, distance measurement, speed measurement, or azimuth measurement, through transmission and reception of the electromagnetic wave. The radar can implement distance detection on the target based on a time of flight of the electromagnetic wave. The time of flight is a time difference between receiving and transmitting of the electromagnetic wave. The radar transmits an electromagnetic wave signal, receives an echo signal of the electromagnetic wave signal, and may implement distance detection on the target based on a time difference between the received echo signal and the transmitted electromagnetic wave signal and a propagation speed of the electromagnetic wave. A distance between the radar and the target may be determined based on the following formula: s=c×t/2, where s is the distance of the target, t is the time of flight, namely, a time period from transmitting of the electromagnetic wave signal from the radar to receiving of the echo signal, and c is the speed of light.

The radar implements speed measurement on the target based on a Doppler effect (Doppler effect). A principle of the Doppler effect is as follows: When a vibration source like a sound, light, and a radio wave moves relative to an observer at a relative speed, frequency of vibration received by the observer is different from frequency generated by the vibration source. When the electromagnetic wave transmitted by the radar moves relative to a detected object, frequency of the echo signal is different from frequency of the transmitted electromagnetic wave signal. When the target approaches an antenna of the radar, the frequency of the echo signal is higher than the frequency of the transmitted electromagnetic wave signal. When the target moves away from the antenna of the radar, the frequency of the echo signal is lower than the frequency of the transmitted electromagnetic wave signal. A frequency change caused by the Doppler effect is referred to as a Doppler frequency shift, which is proportional to the relative speed and inversely proportional to the vibration frequency. Therefore, by detecting a frequency difference between the transmitted electromagnetic wave signal and the echo signal, a moving speed of the target relative to the radar, namely, the relative speed of the target relative to the radar, can be measured.

The radar may measure an azimuth in an amplitude method, a phase method, or the like. The amplitude method is used to measure an angle by using an amplitude value of an echo signal received by an antenna, and a change rule of the amplitude value depends on an antenna directivity pattern and a scanning manner of the antenna. The phase method is used to measure an angle by using a phase difference between echo signals received by a plurality of antenna units. For example, the radar receives echo signals reflected by a same target by using an antenna array, and calculates the azimuth of the target based on a phase difference of the echo signals.

A detection medium of a millimeter-wave radar is an electromagnetic wave within a specific wavelength range, for example, a microwave. Currently, a millimeter wave (millimeter wave) and a centimeter wave (for example, a centimeter wave in a 24 GHz frequency band) adjacent to the millimeter wave in wave bands are commonly used. The millimeter wave is an electromagnetic wave with a wavelength of 1 to 10 millimeters (mm), and a wavelength of an electromagnetic wave in the 24 GHz frequency band is slightly greater than 10 mm. A wavelength of the detection medium of the millimeter-wave radar is in an overlapped wavelength range of the microwave and a far infrared wave. Therefore, the detection medium of the millimeter-wave radar has characteristics of two spectrums. According to a wave propagation theory, higher frequency indicates a shorter the wavelength, higher resolution, and a stronger penetration capability, while in this case, a loss in a propagation process is larger, and a transmission distance is shorter. On the contrary, lower the frequency indicates a longer wavelength, a stronger diffraction capability, and a longer the transmission distance. Therefore, compared with the microwave, the detection medium of the millimeter-wave radar has high resolution, good directivity, a strong antiinterference capability, and good detection performance. Compared with infrared, the detection media of the millimeter-wave radar has lower atmospheric attenuation, better penetration to smoke and dust, and is less affected by weather. Therefore, the millimeter-wave radar is increasingly widely used in a plurality of fields such as intelligent vehicles, drones, intelligent transportation, and industrial automation.

Based on a detection distance, the Radar can be classified into a long-distance radar (long range radar, LRR), a medium range radar (mid/medium range radar, MRR), and a short range radar (short range radar, SRR). The LRR has a high requirement on a detection distance, and has a low requirement on a width of a detection angular domain. The SRR has a low requirement on a detection distance, and has a high requirement on a width of a detection angular domain. A requirement of the MRR on a detection distance and a width of an angular domain may be understood as being between that of the LRR and that of the SRR. For example, the detection distance of the LRR may be more than 200 meters, and the width of the angular domain may be ±15°; the detection distance of the MRR may be within 100 meters, and the width of the angular domain may be ±45°; and the detection distance of the SRR may be within 60 meters, and the width of the angular domain may be ±80°. During use, different types of Radars may be installed at different positions of a vehicle body based on a function requirement of autonomous driving and a use status of another sensor. A quantity and types of the Radars may be selected based on a requirement.

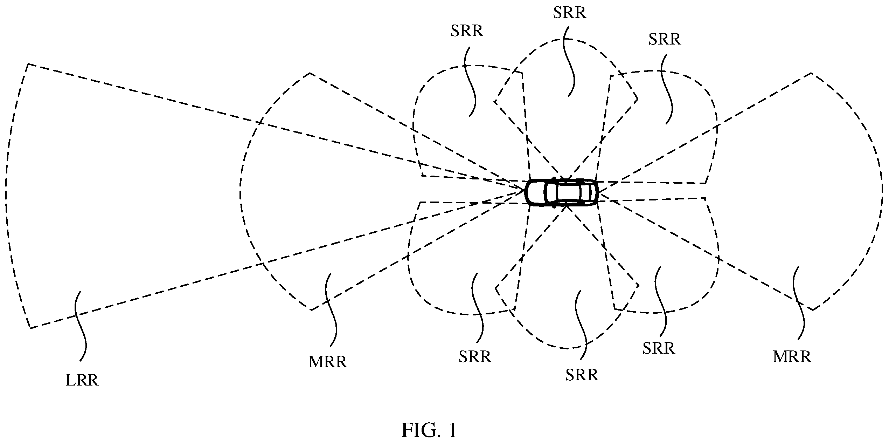

FIG. 1 is a diagram of radar distribution according to an embodiment of this application.

FIG. 1 shows possible installation positions of several types of Radars. The installation positions are merely examples, and during actual use, more or fewer Radars may be selected, and the types may also be adjusted.

As shown in FIG. 1, an LRR may be installed on the front of a vehicle body and serve as a forward radar; an MRR may be installed on the front or the rear of the vehicle body and serve as a forward radar or a backward radar; and an SRR may be installed on a side of the vehicle body or four corners of the vehicle body and serve as a side radar or an angular radar. In addition, the MRR may alternatively be installed on a side of the vehicle body or the four corners of the vehicle body, and the SRR may alternatively be installed on the front or rear of the vehicle body.

The Radar may be classified based on a modulation manner (or a radiation manner) of an electromagnetic wave of the Radar. The modulation manner of the electromagnetic wave of the Radar includes a pulse manner and a continuous wave manner. Therefore, the Radar may be classified into a pulse radar and a continuous wave radar. The continuous wave manner may be further classified into frequency shift keying (frequency shift keying, FSK), phase shift keying (phase shift keying, PSK), a constant-frequency/single-frequency continuous wave (continuous wave CW), a frequency modulated continuous wave (frequency modulated continuous wave, FMCW), multiple frequency shift keying (multiple frequency shift keying, MFSK), a phase modulated continuous wave (phase modulated continuous wave, PMCW), and another manner. Featuring in multi-target detection, high resolution, and low costs, the FMCW manner has become a mainstream radar modulation manner.

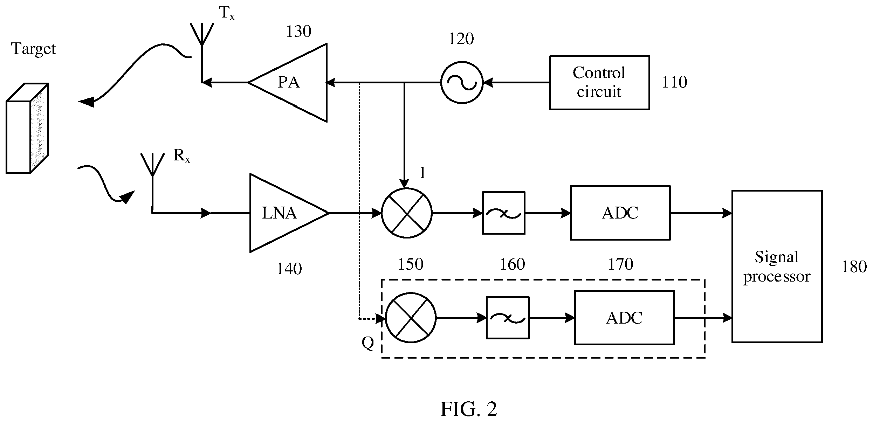

FIG. 2 is a diagram of an architecture of a radar according to an embodiment of this application.

As shown in FIG. 2, the Radar includes a control circuit 110, a signal generator 120, a power amplifier (power amplifier, PA) 130, a low noise amplifier (low noise amplifier, LNA) 140, a frequency mixer 150, a filter 160, an analog-to-digital converter (analog-to-digital converter, ADC) 170, and a signal processor 180. The signal processor, for example, a digital signal processor (digital signal processor, DSP), is usually configured to process a digital signal. The signal generator 120 generates an electromagnetic wave signal (also referred to as a radar signal) waveform under control of the control circuit 110. For example, a Radar using an FMCW modulation manner generates a sawtooth wave or a triangular wave under control of the control circuit 110. The signal generator 120 is, for example, a voltage-controlled oscillator, and the control circuit 110 is configured to generate a control voltage. The generated electromagnetic wave signal waveform is processed through conversion and modulation to a required frequency band, for example, between 76 GHz and 77 GHz, and is radiated to space through a transmit antenna (TX) after being amplified by the PA 130.

An electromagnetic wave signal radiated through the transmit antenna is radiated to a target and then reflected to the space, and is received by a receive antenna (RX) of the Radar. After being amplified by the LNA 140, the electromagnetic wave signal is mixed with a reference signal by the frequency mixer 150. The reference signal may generally use the foregoing generated electromagnetic wave signal. After filtering by the filter 160, the frequency mixer 150 may obtain an analog baseband signal, and obtain a digital baseband signal through sampling by the ADC 170. Signal processing of the digital baseband signal is completed in the signal processor 180, to obtain information about a distance, a speed, and an angle of the target. In addition, processing such as clustering and/or tracking may be performed by using the obtained information, to further obtain information such as a track, a size, and a type of the target.

The foregoing components of the Radar may be integrated based on a requirement to implement miniaturization of the radar. For example, components such as the control circuit 110, the signal generator 120, the power amplifier (power amplifier, PA) 130, the low noise amplifier (low noise amplifier, LNA) 140, the frequency mixer 150, the filter 160, and the analog-to-digital converter (analog-to-digital converter, ADC) 170 may be integrated on at least one chip, for example, integrated into a monolithic microwave integrated circuit (monolithic microwave integrated circuit, MMIC).

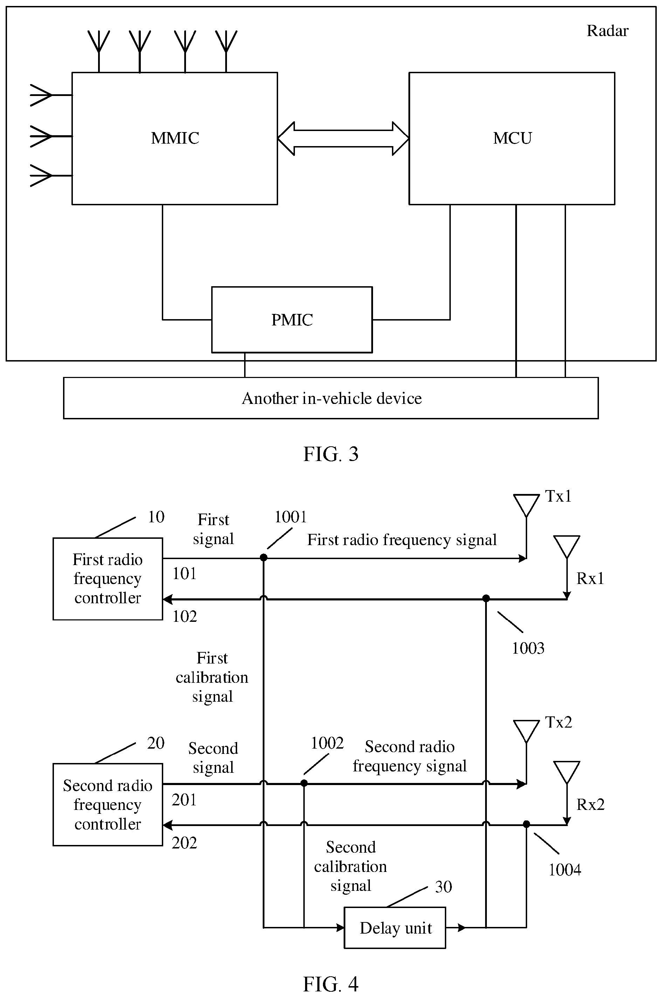

Specifically, refer to FIG. 3. FIG. 3 is a diagram of an architecture of a radar according to an embodiment of this application.

As shown in FIG. 3, the Radar includes an MMIC, a microcontroller unit (microcontroller unit, MCU), and a power management integrated circuit (power management integrated circuit, PMIC). The MMIC may integrate a function of a radio frequency part. The MCU may integrate a function of the foregoing baseband part, for example, integrate a function of the foregoing signal processor. In addition, the MCU may further provide a communication interface for communicating with another in-vehicle device. The PMIC is a chip that supplies power to a hardware system of the radar.

A dedicated calibration channel is required during calibration by a current calibration network, and therefore, selection of a radio frequency chip is limited, and a requirement for channel calibration between different chips cannot be supported. In view of this problem, this application relates to the field of millimeter-wave radar technologies, and provides an antenna apparatus, a radar, a terminal device, and a vehicle, to effectively resolve the foregoing problem and support the requirement for channel calibration between different chips.

The following describes the antenna apparatus provided in this application with reference to the accompanying drawings.

FIG. 4 is a diagram of a structure of an antenna apparatus according to an embodiment of this application.

As shown in FIG. 4, the antenna apparatus includes:
a first radio frequency controller 10, a second radio frequency controller 20, and a delay unit 30.

The first radio frequency controller 10 is configured to generate a first signal, where the first radio frequency controller 10 includes at least one first transmit port 101 and/or at least one first receive port 102.

The second radio frequency controller 20 is configured to generate a second signal, where the second radio frequency controller 20 includes at least one second transmit port 201 and/or at least one second receive port 202.

A first radio frequency signal corresponding to the first signal is transmitted to an air interface through an antenna Tx1 corresponding to the first transmit port 101, where the first radio frequency signal is used to detect a target.

A first calibration signal corresponding to the first signal is separately transmitted to the first receive port 102 and the second receive port 202 through the delay unit 30.

A second radio frequency signal corresponding to the second signal is transmitted to an air interface through an antenna Tx2 corresponding to the second transmit port 201, where the second radio frequency signal is used to detect the target.

A second calibration signal corresponding to the second signal is separately transmitted to the first receive port 102 and the second receive port 202 through the delay unit 30.

The delay unit 30 is configured to delay transmission of the first calibration signal and the second calibration signal.

It can be understood that, after passing through a first node 1001, the first signal generated by the first radio frequency controller is divided into two signals, namely, the first radio frequency signal and the first calibration signal. After passing through a second node 1002, the second signal generated by the second radio frequency controller is divided into two signals, namely, the second radio frequency signal and the second calibration signal.

It may be understood that the two signals (the first calibration signal and the first radio frequency signal) obtained by dividing the first signal have a same signal component, but an energy proportion of the first calibration signal is far lower than an energy proportion of the first radio frequency signal. **In** this way, the antenna apparatus can implement system calibration by using the first calibration signal without affecting a normal detection function of the first radio frequency signal. Similarly, a relationship between the two signals (the second calibration signal and the second radio frequency signal) obtained by dividing the second signal is similar to that between the first calibration signal and the first radio frequency signal. Details are not described herein again.

It may be understood that, the first radio frequency controller 10 in the antenna apparatus generates the first signal, where the first radio frequency signal corresponding to the first signal is transmitted to the air interface through the antenna Tx1 corresponding to the first transmit port 101 of the first radio frequency controller 10, to detect the target; and the first calibration signal corresponding to the first signal is separately transmitted to receive ports (including but not limited to the receive port 102 and the receive port 202) of radio frequency controllers (including but not limited to the first radio frequency controller 10 and the second radio frequency controller 20) in the antenna apparatus through the delay unit 30 in the antenna apparatus, and a transmission delay is generated when the first calibration signal passes through the delay unit 30.

Similarly, the second radio frequency controller 20 in the antenna apparatus generates the second signal, where the second radio frequency signal corresponding to the second signal is transmitted to the air interface through the antenna Tx2 corresponding to the second transmit port 201 of the second radio frequency controller 20, to detect the target; and the second calibration signal corresponding to the second signal is separately transmitted to receive ports (including but not limited to the receive port 202 and the receive port 102) of radio frequency controllers (including but not limited to the second radio frequency controller 20 and the first radio frequency controller 10) in the antenna apparatus through the delay unit 30 in the antenna apparatus, and a transmission delay is generated when the second calibration signal passes through the delay unit 30.

In this embodiment of this application, a service transmit channel and a service receive channel of each radio frequency controller is multiplexed for loopback transmission of a calibration signal. For example, a service transmit channel and a service receive channel of the first radio frequency controller are multiplexed, so that the first calibration signal is transmitted to the first radio frequency controller in a loopback manner. For another example, a service transmit channel and a service receive channel of the second radio frequency controller are multiplexed, so that the second calibration signal is transmitted to the second radio frequency controller in a loopback manner. In this way, intra-system calibration can be implemented without depending on a dedicated calibration channel, and a requirement for channel calibration between different chips can be supported.

In addition, the delay unit is used to delay transmission of each calibration signal, so that the looped-back calibration signal is distinguished from leakage energy between the service transmit channel and the service receive channel in terms of time. For example, the looped-back first calibration signal is distinguished from leakage energy between the service transmit channel (a channel corresponding to Tx1) and the service receive channel (a channel corresponding to Rx1) of the first radio frequency controller in terms of time. For another example, the looped-back second calibration signal is distinguished from leakage energy between the service transmit channel (a channel corresponding to Tx2) and the service receive channel (a channel corresponding to Rx2) of the second radio frequency controller in terms of time. In this way, a requirement for isolation between the service transmit channel and the service receive channel is reduced, and a compact design and high reliability of the apparatus are implemented.

In a possible embodiment, the delay unit 30 includes but is not limited to at least one of the following:
a serpentine waveguide and a cascaded resonant cavity.

The serpentine waveguide is a waveguide with a meandered transmission channel (similar to a snake shape), and the cascaded resonant cavities may be a plurality of resonant cavities connected in a snake shape.

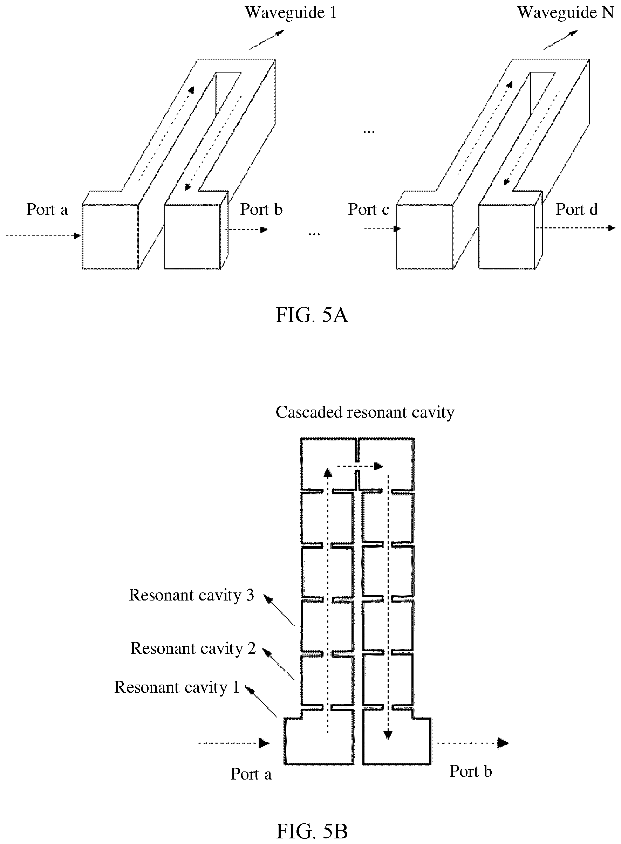

FIG. 5A and 5B are diagrams of structures of two delay apparatuses according to embodiments of this application.

As shown in FIG. 5A, N waveguides (a waveguide 1, a waveguide 2, ..., and a waveguide N) are sequentially connected to form a waveguide with a meandered transmission channel (similar to a snake shape). Each calibration signal sequentially passes through the N waveguides, and a transmission path of the calibration signal is the meandered transmission channel formed by the N waveguides. For example, the calibration signal is input from a port a of the waveguide 1, is transmitted along a dashed arrow, is output from a port b of the waveguide 1, enters an input port of a next waveguide, and is output from an output port of the waveguide after passing through a meandered transmission channel. After being transmitted through the N waveguides, the calibration signal is finally output from an output port (a port d) of the waveguide N.

Generally, by using the serpentine waveguide shown in FIG. 5A, a range of a transmission delay of the calibration signal is 1 ns to 50 ns. In this case, a time at which the calibration signal arrives at a receive port of a radio frequency controller is much later than a time at which leakage energy between the service receive channel and the service transmit channel of the radio frequency controller arrives at a receive port of the radio frequency controller.

For example, when leakage energy corresponding to the first signal arrives at the receive port of the first radio frequency controller, the first calibration signal corresponding to the first signal may be still transmitted in the serpentine waveguide at this moment. The first calibration signal and the leakage energy corresponding to the first signal are designed to have different arrival times at receive ports of radio frequency controllers, so that the first calibration signal and the leakage energy corresponding to the first signal are distinguished in terms of time, thereby improving an SINR of the first calibration signal.

According to embodiments of this application, a calibration signal and leakage energy corresponding to a service signal are distinguished at receive ports of radio frequency controllers, so that a requirement for isolation between a service transmit channel and a service receive channel can be reduced, and a compact design and high reliability of the apparatus can be implemented.

As shown in FIG. 5B, N resonant cavities (a resonant cavity 1, a resonant cavity 2, ..., and a resonant cavity N) are cascaded to form a channel that can transmit a signal. Each calibration signal sequentially passes through the N resonant cavities, and a transmission path of the calibration signal is a meandered transmission channel formed by the N resonant cavities. For example, the calibration signal is input from a port a of the resonant cavity 1, is transmitted along a dashed arrow, successively passes through the resonant cavity 2, the resonant cavity 3, ..., and the resonant cavity N, and finally is output from an output port (a port b) of the resonant cavity N.

Generally, when the calibration signal passes through the cascaded resonant cavity shown in FIG. 5B, a larger transmission delay may be obtained in limited space by using a group velocity change of a radio frequency signal near a resonant point, so that a time at which the calibration signal arrives at a receive port of a radio frequency controller is much later than a time at which leakage energy between a service transmit channel and a service receive channel of the radio frequency controller arrives at the receive port of the radio frequency controller.

For example, when leakage energy corresponding to the second signal arrives at the receive port of the second radio frequency controller, the second calibration signal corresponding to the second signal may be still transmitted in the cascaded resonant cavity at this moment. The second calibration signal and the leakage energy corresponding to the second signal are designed to have different arrival times at receive ports of radio frequency controllers, so that the second calibration signal and the leakage energy corresponding to the second signal are distinguished in terms of time, thereby improving an SINR of the second calibration signal.

According to embodiments of this application, a calibration signal and leakage energy corresponding to a service signal are distinguished at receive ports of radio frequency controllers, so that a requirement for isolation between a service transmit channel and a service receive channel can be reduced, and a compact design and high reliability of the apparatus can be implemented.

It may be understood that the delay unit 30 may further include another module or component configured to delay transmission of each calibration signal in the calibration system, in addition to the serpentine waveguide and the cascaded resonant cavity. This is not limited in this application.

According to embodiments of this application, a transmission delay is generated when each calibration signal passes through the delay unit 30, so that the looped-back calibration signal is distinguished from leakage energy between the service transmit channel and the service receive channel in terms of time, thereby improving an SINR of the looped-back calibration signal, reducing a requirement for isolation between the service transmit channel and the service receive channel, and implementing a compact design and high reliability of the apparatus.

In a possible embodiment, the radio frequency controller in the antenna apparatus may be a monolithic microwave integrated circuit (monolithic microwave integrated circuit, MMIC).

In a possible embodiment, the antenna apparatus may include a plurality of radio frequency controllers, and the plurality of radio frequency controllers may implement functions similar to those of the first radio frequency controller and/or the second radio frequency controller, to implement intra-system calibration.

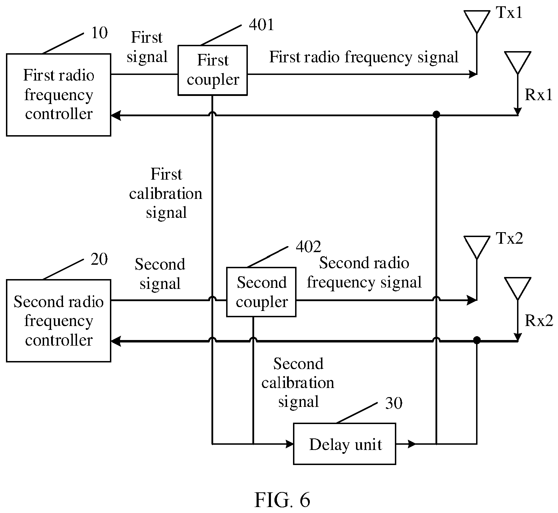

FIG. 6 is a diagram of a structure of an antenna apparatus according to an embodiment of this application.

As shown in FIG. 6, the antenna apparatus includes:
a first radio frequency controller 10, a second radio frequency controller 20, and a delay unit 30.

A connection relationship and a signal flow direction of the first radio frequency controller 10, the second radio frequency controller 20, and the delay unit 30 are similar to those of the antenna apparatus shown in FIG. 4. Details are not described herein again.

In addition, the antenna apparatus in this embodiment of this application further includes:
a first coupler 401 and a second coupler 402.

The first coupler 401 is disposed on a transmit channel of the first radio frequency controller 10, and the second coupler 402 is disposed on a transmit channel of the second radio frequency controller 20.

The first coupler 401 is configured to tap a first calibration signal from a first signal, where a signal left after tapping of the first signal is a first radio frequency signal.

The second coupler 402 is configured to tap a second calibration signal from a second signal, where a signal left after tapping of the second signal is a second radio frequency signal.

It may be understood that a position of the first coupler 401 may be a position of the first node 1001 in FIG. 4, and a position of the second coupler 402 may be a position of the second node 1002 in FIG. 4.

It may be understood that the first coupler 401 is disposed on the transmit channel of the first radio frequency controller 10 (namely, a channel corresponding to a transmit antenna Tx1), and is configured to tap the first calibration signal from the first signal generated by the first radio frequency controller 10, where the first signal left after tapping is the first radio frequency signal transmitted to an air interface. It may be understood that an energy proportion of the first calibration signal tapped from the first signal is far lower than an energy proportion of the first radio frequency signal. In this way, the antenna apparatus can implement system calibration by using the first calibration signal without affecting a normal detection function of the first radio frequency signal.

Similarly, the second coupler 402 is disposed on the transmit channel of the second radio frequency controller 20 (namely, a channel corresponding to a transmit antenna Tx2), and is configured to tap a second calibration signal from a second signal generated by the second radio frequency controller 20, where the second signal left after tapping is a second radio frequency signal transmitted to an air interface. It may be understood that an energy proportion of the second calibration signal tapped from the second signal is far lower than an energy proportion of the second radio frequency signal. In this way, the antenna apparatus can implement system calibration by using the second calibration signal without affecting a normal detection function of the second radio frequency signal.

Similarly, a coupler may also be disposed on a transmit channel of another radio frequency controller in the antenna apparatus, to implement a function similar to functions of the first coupler and the second coupler. This is not limited in this application.

According to embodiments of this application, the coupler is used to tap some energy from a service transmit channel as a calibration signal for loopback transmission, and a service transmit channel and a service receive channel of each radio frequency controller is multiplexed, without depending on a dedicated calibration channel, so that a requirement for channel calibration between different chips can be supported.

In a possible embodiment, the first coupler 401 and the second coupler 402 may include but are not limited to a module or a component configured to tap a signal, for example, a small-aperture directional coupler and a cross-slot coupler.

According to embodiments of this application, various types of couplers may tap some energy from the service transmit channel as a calibration signal for loopback transmission, to implement loopback transmission of each calibration signal in a system, thereby implementing intra-system calibration.

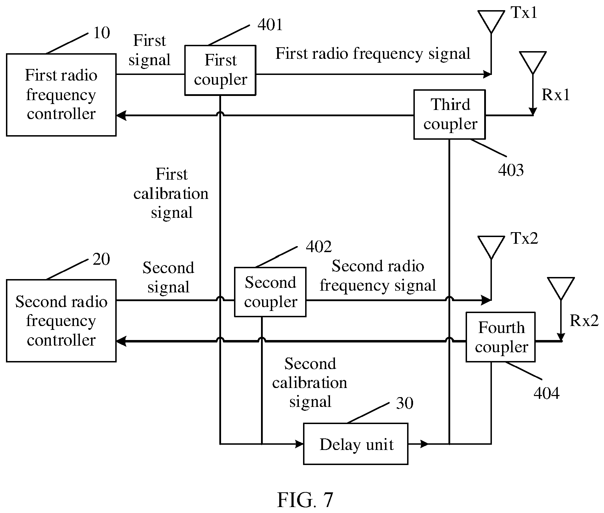

FIG. 7 is a diagram of a structure of an antenna apparatus according to an embodiment of this application.

As shown in FIG. 7, the antenna apparatus includes:
a first radio frequency controller 10, a second radio frequency controller 20, and a delay unit 30.

A connection relationship and a signal flow direction of the first radio frequency controller 10, the second radio frequency controller 20, and the delay unit 30 are similar to those of the antenna apparatus shown in FIG. 4. Details are not described herein again.

It can be learned from FIG. 7 that the antenna apparatus further includes:
a first coupler 401 and a second coupler 402.

A connection relationship between the first coupler 401 and the second coupler 402 and a signal flow direction are similar to those of the antenna apparatus shown in FIG. 6. Details are not described herein again.

In addition, the antenna apparatus in this embodiment of this application further includes:
a third coupler 403 and a fourth coupler 404.

The third coupler 403 is disposed on a receive channel of the first radio frequency controller 10, and the fourth coupler 404 is disposed on a receive channel of the second radio frequency controller 20.

The third coupler 403 is configured to couple a first calibration signal and a second calibration signal to the first radio frequency controller 10.

The fourth coupler 404 is configured to couple the first calibration signal and the second calibration signal to the second radio frequency controller 20.

It may be understood that a position of the third coupler 403 may be a position of a third node 1003 in FIG. 4, and a position of the fourth coupler 404 may be a position of a fourth node 1004 in FIG. 4.

It may be understood that the third coupler 403 is disposed on the receive channel of the first radio frequency controller 10 (namely, a channel corresponding to a receive antenna Rx1), and is configured to couple calibration signals (including but not limited to the first calibration signal and the second calibration signal) in a system to the first radio frequency controller 10.

Similarly, the fourth coupler 404 is disposed on the receive channel of the second radio frequency controller 20 (namely, a channel corresponding to a receive antenna Rx2), and is configured to couple calibration signals (including but not limited to the first calibration signal and the second calibration signal) in the system to the second radio frequency controller 20.

Similarly, a coupler may also be disposed on a receive channel of another radio frequency controller in the antenna apparatus, to implement a function similar to functions of the third coupler and the fourth coupler. This is not limited in this application.

According to embodiments of this application, calibration signals are coupled to corresponding radio frequency controllers by using a coupler, to implement loopback transmission of each calibration signal in the system, thereby implementing intra-system calibration.

In a possible embodiment, the third coupler 403 and the fourth coupler 404 may include but are not limited to a module or a component configured to couple a signal, for example, a small-aperture directional coupler and a cross-slot coupler.

According to embodiments of this application, calibration signals may be coupled to corresponding radio frequency controllers by using various couplers, to implement loopback transmission of each calibration signal in the system, thereby implementing intra-system calibration.

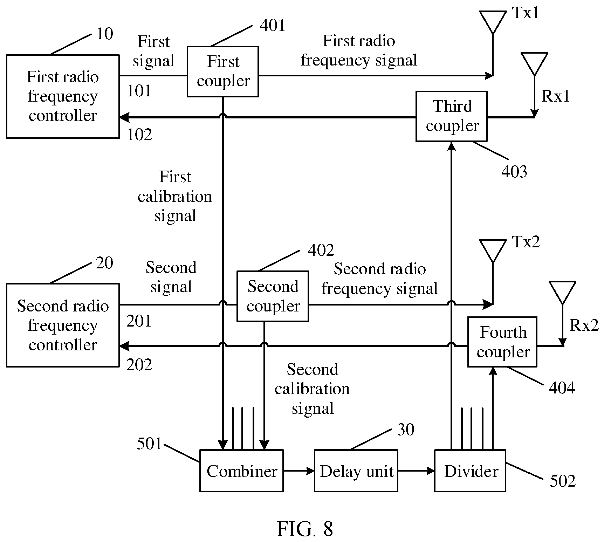

FIG. 8 is a diagram of a structure of an antenna apparatus according to an embodiment of this application.

As shown in FIG. 8, the antenna apparatus includes:
a first radio frequency controller 10, a second radio frequency controller 20, and a delay unit 30.

A connection relationship and a signal flow direction of the first radio frequency controller 10, the second radio frequency controller 20, and the delay unit 30 are similar to those of the antenna apparatus shown in FIG. 4. Details are not described herein again.

It can be learned from FIG. 8 that the antenna apparatus further includes:
a first coupler 401 and a second coupler 402.

A connection relationship between the first coupler 401 and the second coupler 402 and a signal flow direction are similar to those of the antenna apparatus shown in FIG. 6. Details are not described herein again.

It can be learned from FIG. 8 that the antenna apparatus further includes:
a third coupler 403 and a fourth coupler 404.

A connection relationship between the third coupler 403 and the fourth coupler 404 and a signal flow direction are similar to those of the antenna apparatus shown in FIG. 7. Details are not described herein again.

In addition, the antenna apparatus in this embodiment of this application further includes:
a combiner 501 and a divider 502.

The combiner 501 is configured to combine a first calibration signal and a second calibration signal to the delay unit 30.

The divider 502 is configured to: divide the first calibration signal that passes through the delay unit 30 to a first receive port 102 and a second receive port 202, and divide the second calibration signal that passes through the delay unit 30 to the first receive port 102 and the second receive port 202.

It may be understood that, a position of the combiner 501 may be a position of a transmission node of the first calibration signal and the second calibration signal, and a position of the divider 502 may be a position of a transmission node through which the delay unit 30 transmits the calibration signal separately to the third coupler 403 and the fourth coupler 404.

It may be understood that the combiner 501 is configured to combine calibration signals (including but not limited to the first calibration signal and the second calibration signal) in a system to the delay unit 30, to delay transmission of the calibration signals.

The divider 502 is configured to divide the calibration signals (including but not limited to the first calibration signal and the second calibration signal) in the system to radio frequency controllers. For example, the divider 502 divides the first calibration signal into N sub-signals, and separately transmits the N sub-signals to the radio frequency controllers through receive channels of the radio frequency controllers, where N is a quantity of radio frequency controllers that participate in system calibration in the antenna apparatus.

Optionally, the divider 502 in the antenna apparatus in this embodiment of this application may be a power divider, and is configured to divide one calibration signal into N sub-signals and separately transmit the N sub-signals to radio frequency controllers. In this case, the combiner 501 may be a reverse use of a function of the power divider, that is, the combiner 501 is configured to combine a plurality of calibration signals into the delay unit 30.

According to embodiments of this application, loopback transmission of each calibration signal in the system can be implemented, thereby implementing intra-system calibration.

In a possible embodiment, the calibration signal that passes through the combiner 501 is a time division signal, a frequency division signal, or a code division signal.

It may be understood that, when each calibration signal passes through the combiner 501, the calibration signal may be transmitted in a time division manner, a frequency division manner, or a code division manner, to ensure isolation of the calibration signal on each branch channel.

In a possible embodiment, the combiner 501 and the divider 502 may include but are not limited to modules or components configured to combine signals or divide a signal, such as a waveguide bridge and a serial feeding coupler.

The waveguide bridge may also be referred to as a hybrid junction or a hybrid joint.

According to embodiments of this application, various types of combiners and dividers may be used to implement loopback transmission of each calibration signal in the system.

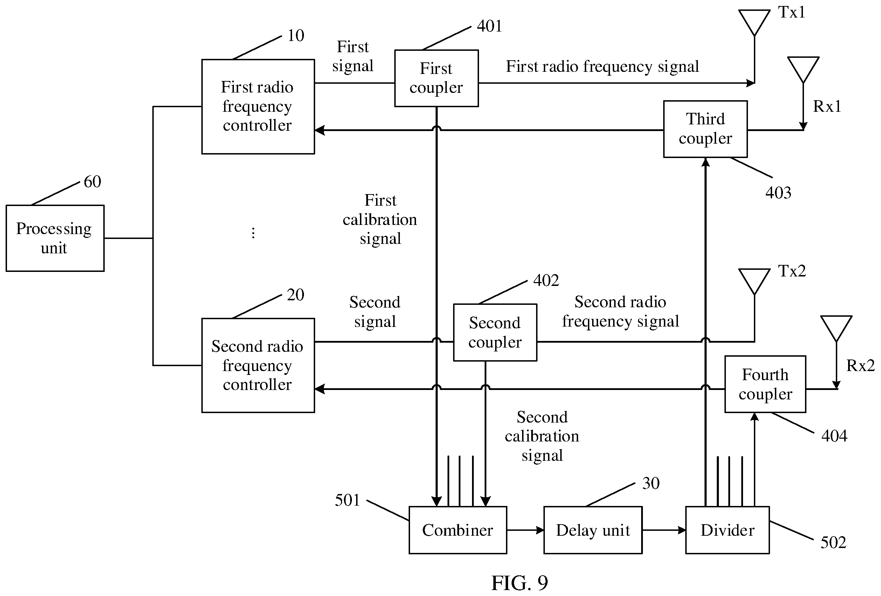

FIG. 9 is a diagram of a structure of an antenna apparatus according to an embodiment of this application.

As shown in FIG. 9, the antenna apparatus includes:
a first radio frequency controller 10, a second radio frequency controller 20, and a delay unit 30.

A connection relationship and a signal flow direction of the first radio frequency controller 10, the second radio frequency controller 20, and the delay unit 30 are similar to those of the antenna apparatus shown in FIG. 4. Details are not described herein again.

It can be learned from FIG. 9 that the antenna apparatus further includes:
a first coupler 401 and a second coupler 402.

A connection relationship between the first coupler 401 and the second coupler 402 and a signal flow direction are similar to those of the antenna apparatus shown in FIG. 6. Details are not described herein again.

It can be learned from FIG. 9 that the antenna apparatus further includes:
a third coupler 403 and a fourth coupler 404.

A connection relationship between the third coupler 403 and the fourth coupler 404 and a signal flow direction are similar to those of the antenna apparatus shown in FIG. 7. Details are not described herein again.

It can be learned from FIG. 9 that the antenna apparatus further includes:
a combiner 501 and a divider 502.

A connection relationship between the combiner 501 and the divider 502 and a signal flow direction are similar to those of the antenna apparatus shown in FIG. 8. Details are not described herein again.

In addition, the antenna apparatus in this embodiment of this application further includes:
a processing unit 60.

The processing unit 60 is configured to obtain a target transmit parameter based on a transmit parameter of a first calibration signal and a transmit parameter of a second calibration signal, where the target transmit parameter includes a target amplitude and/or a target phase of a signal.

The processing unit 60 is further configured to: based on the target transmit parameter, scale an amplitude of the first calibration signal and an amplitude of the second calibration signal to the target amplitude, and/or align a phase of the first calibration signal and a phase of the second calibration signal with the target phase.

It may be understood that the processing unit 60 is configured to obtain the target transmit parameter based on transmit parameters of calibration signals (including but not limited to the first calibration signal and the second calibration signal), where the target transmit parameter includes but is not limited to information such as the target amplitude and the target phase of the signal. The processing unit 60 then aligns the transmit parameters of the calibration signals (including but not limited to the first calibration signal and the second calibration signal) with the target transmit parameter, for example, scales the amplitude of the first calibration signal and the amplitude of the second calibration signal to the target amplitude, and aligns the phase of the first calibration signal and the phase of the second calibration signal with the target phase.

Optionally, obtaining the target transmit parameter based on the transmit parameters of the calibration signals may be using an average value/median value/mode value of the transmit parameters of the calibration signals as the target transmit parameter, or may be using a transmit parameter of one of the calibration signals as the target transmit parameter, or the like. This is not limited in this application.

According to embodiments of this application, intra-system calibration may be implemented by using a calibration signal transmitted in a loopback manner on a service channel of each radio frequency controller, without depending on a dedicated calibration channel, so that a requirement for channel calibration between different chips can be supported.

With reference to the diagram of the structure of the antenna apparatus shown in any one of FIG. 4 to FIG. 9, this application further provides several corresponding diagrams of three-dimensional structures of the antenna apparatuses.

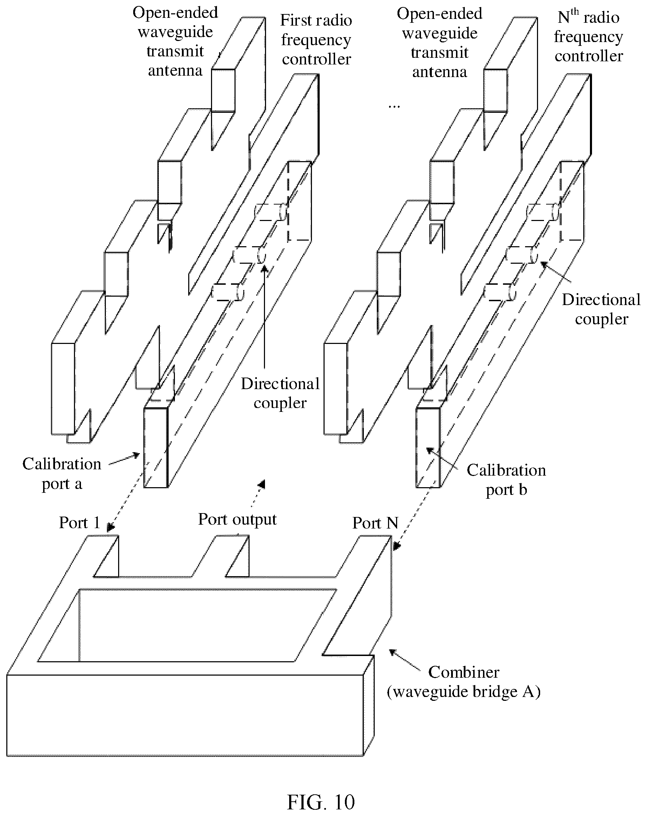

FIG. 10 is a diagram of a structure of an antenna apparatus according to an embodiment of this application.

As shown in FIG. 10, the antenna apparatus includes a plurality of radio frequency controllers, and the radio frequency controllers specifically include but are not limited to a first radio frequency controller, an N^{th} radio frequency controller, and the like, where N is an integer greater than 1.

In the antenna apparatus in this embodiment of this application, an open-ended waveguide antenna is used, to radiate energy of a service signal to an air interface. It may be understood that the open-ended waveguide antenna may correspond to the transmit antenna Tx1 and/or the transmit antenna Tx2 in FIG. 4.

In the antenna apparatus in this embodiment of this application, a small-aperture directional coupler is used, to tap some energy from a transmit channel of a service signal as a calibration signal, for loopback transmission of the calibration signal. For example, the small-aperture directional coupler is used to tap some energy from a transmit channel of a service signal of the first radio frequency controller as a calibration signal, and transmit the calibration signal from a calibration port a to a port 1 of a combiner (a waveguide bridge A); and the small-aperture directional coupler is used to tap some energy from a transmit channel of a service signal of the N^{th} radio frequency controller as a calibration signal, and transmit the calibration signal from a calibration port b to a port N of the combiner (the waveguide bridge A). It may be understood that the small-aperture directional coupler may correspond to the first coupler 401 and/or the second coupler 402 in FIG. 6. The calibration port a may correspond to a port for transmission from the first coupler 401 to the delay unit 30 in FIG. 6, and the calibration port b may correspond to a port for transmission from the second coupler 402 to the delay unit 30 in FIG. 6.

In the antenna apparatus in this embodiment of this application, a 180° waveguide bridge is used as the combiner, and the combiner is configured to: combine calibration signals, output the calibration signals from an output port (an output port), and transmit the calibration signals to the delay unit. It may be understood that the 180° waveguide bridge may correspond to the combiner 501 in FIG. 8.

It may be understood that the antenna apparatus in this embodiment of this application may include a plurality of radio frequency controllers. For brevity of illustrations and text descriptions, FIG. 10 shows only the first radio frequency controller and the N^{th} radio frequency controller. This does not constitute a limitation on this embodiment of this application. Correspondingly, the combiner (the waveguide bridge A) in the antenna apparatus may include a plurality of receive ports. For brevity of illustration and text description, the combiner (the waveguide bridge A) in FIG. 10 shows only two receive ports (the port 1 and the port N). This does not constitute a limitation on this embodiment of this application.

According to embodiments of this application, the small-aperture directional coupler is used to tap some energy from a service transmit channel as a calibration signal for loopback transmission, and a service transmit channel and a service receive channel of each radio frequency controller is multiplexed, without depending on a dedicated calibration channel, so that a requirement for channel calibration between different chips can be supported. In addition, the combiner (the waveguide bridge A) is used to combine calibration signals in the system to the delay unit, to delay transmission of each calibration signal, so that an arrival time of the calibration signal is different from an arrival time of leakage energy corresponding to a service signal on receive ports of the radio frequency controllers, and the calibration signal and the leakage energy corresponding to the service signal are distinguished in terms of time, thereby improving an SINR of the calibration signal.

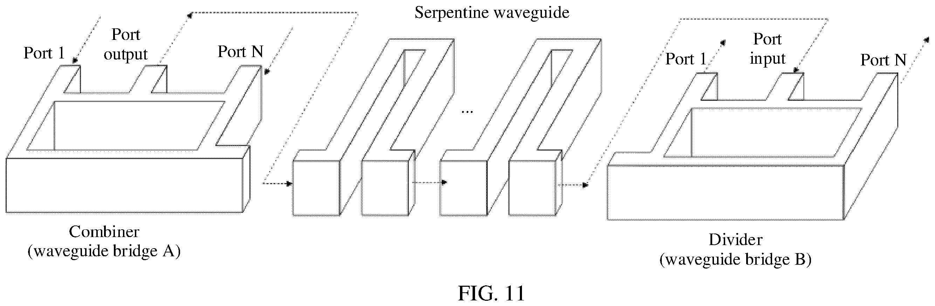

FIG. 11 is a diagram of a structure of an antenna apparatus according to an embodiment of this application.

As shown in FIG. 11, the antenna apparatus includes but is not limited to a combiner (a waveguide bridge A), a serpentine waveguide, and a divider (a waveguide bridge B).

The combiner (the waveguide bridge A) is a 180° waveguide bridge, and is configured to: combine calibration signals received by receive ports (a port 1, ..., and a port N), output the calibration signals from an output port (an output port), and transmit the calibration signals to the serpentine waveguide.

The serpentine waveguide in this embodiment of this application is a waveguide with a meandered transmission channel (similar to a snake shape), and is configured to delay transmission of each calibration signal, so that a range of a transmission delay of the calibration signal is 1 ns to 50 ns. For details, refer to the descriptions of FIG. 5A. Details are not described herein again.

The serpentine waveguide transmits the calibration signal in a delayed manner to a receive port (an input port) of the divider (the waveguide bridge B). The divider (the waveguide bridge B) is a 180° waveguide bridge, and is configured to: divide the received calibration signal into a plurality of sub-signals, and output the plurality of sub-signals to radio frequency controllers from output ports (a port 1, ..., and a port N), to implement loopback transmission of each calibration signal in a system, thereby implementing intra-system calibration.

It may be understood that the combiner (the waveguide bridge A) in this embodiment of this application may correspond to the combiner 501 in FIG. 8, the serpentine waveguide may correspond to the delay unit 30 in FIG. 8, and the divider (the waveguide bridge B) may correspond to the divider 502 in FIG. 8.

According to embodiments of this application, a transmission delay is generated when each calibration signal passes through a delay unit, so that the looped-back calibration signal is distinguished from leakage energy between a service transmit channel and a service receive channel in terms of time, thereby improving an SINR of the looped-back calibration signal, reducing a requirement for isolation between the service transmit channel and the service receive channel, and implementing a compact design and high reliability of the apparatus. In addition, the service transmit channel and the service receive channel of each radio frequency controller is multiplexed, without depending on a dedicated calibration channel, so that a requirement for channel calibration between different chips can be supported.

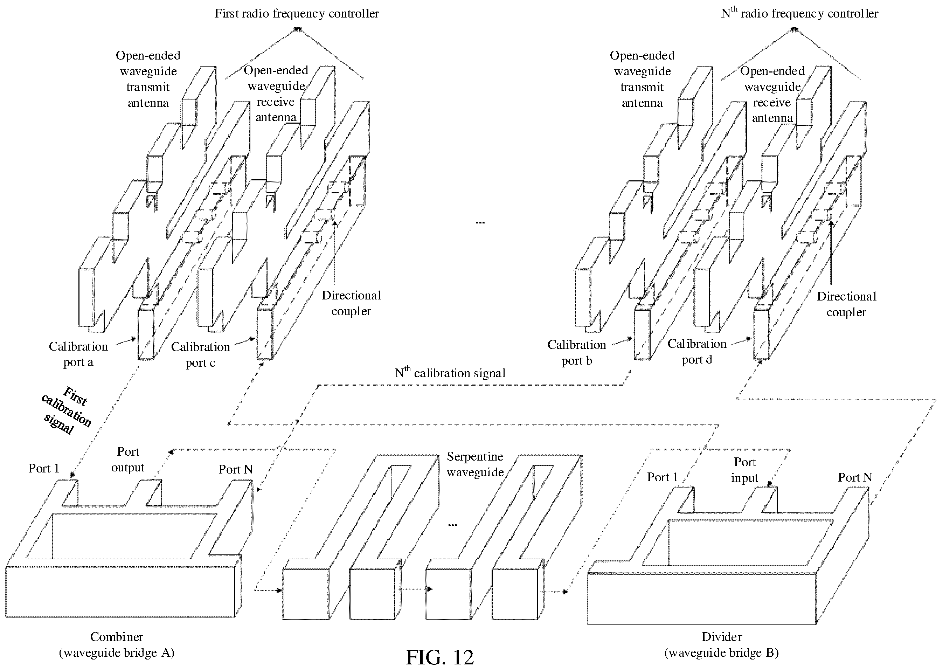

FIG. 12 is a diagram of a structure of an antenna apparatus according to an embodiment of this application.

As shown in FIG. 12, the antenna apparatus includes a plurality of radio frequency controllers, and the radio frequency controllers specifically include but are not limited to a first radio frequency controller, an N^{th} radio frequency controller, and the like, where N is an integer greater than 1. The antenna apparatus further includes a combiner (a waveguide bridge A), a serpentine waveguide, and a divider (a waveguide bridge B).

The antenna apparatus in this embodiment of this application may be understood as a combination of the antenna apparatuses shown in FIG. 10 and FIG. 11.

A small-aperture directional coupler in a first radio frequency controller taps some energy from a transmit channel of a service signal as a first calibration signal, and outputs the first calibration signal from a calibration port a to a receive port 1 of the combiner (the waveguide bridge A). By analogy, a small-aperture directional coupler in an N^{th} radio frequency controller taps some energy from the transmit channel of the service signal as an N^{th} calibration signal, and outputs the N^{th} calibration signal from a calibration port b to a receive port N of the combiner (the waveguide bridge A).

The combiner (the waveguide bridge A) is configured to combine calibration signals (including but not limited to the first calibration signal and the N^{th} calibration signal), output the calibration signals from an output port (an output port), and transmit the calibration signals to the serpentine waveguide.

The serpentine waveguide is configured to: delay transmission of each calibration signal, and transmit the calibration signal to a receive port (an input port) of the divider (the waveguide bridge B) in a delayed manner.

The divider (the waveguide bridge B) is configured to divide the received calibration signal into a plurality of sub-signals, and separately output the plurality of sub-signals from output ports (a port 1, ..., and a port N) to radio frequency controllers, to implement loopback transmission of each calibration signal in the system, thereby implementing intra-system calibration. For example, the divider (the waveguide bridge B) divides the received first calibration signal into N sub-signals, and the N sub-signals are separately output from the port 1 to a calibration port c of the first radio frequency controller, to be transmitted to the first radio frequency controller, and are output from a port N to a calibration port d of an N^{th} radio frequency controller, to be transmitted to the N^{th} radio frequency controller. For another example, the divider (the waveguide bridge B) divides the received N^{th} calibration signal into N sub-signals, and the N sub-signals are separately output from the port 1 to the calibration port c of the first radio frequency controller, to be transmitted to the first radio frequency controller, and are output from the port N to the calibration port d of the N^{th} radio frequency controller, to be transmitted to the N^{th} radio frequency controller.

It may be understood that the calibration port c may correspond to a port through which the third coupler 403 in FIG. 8 receives transmission information from the divider 502, and the calibration port d may correspond to a port through which the fourth coupler 404 in FIG. 8 receives transmission information from the divider 502.

According to embodiments of this application, intra-system calibration may be implemented by multiplexing a service transmit channel and a service receive channel of each radio frequency controller for loopback transmission of a calibration signal, without depending on a dedicated calibration channel, so that a requirement for channel calibration between different chips can be supported. In addition, the delay unit is designed to delay transmission of each calibration signal, so that a looped-back calibration signal is distinguished from leakage energy between the service transmit channel and the service receive channel in terms of time, thereby reducing a requirement for isolation between the service transmit channel and the service receive channel, and implementing a compact design and high reliability of the apparatus.

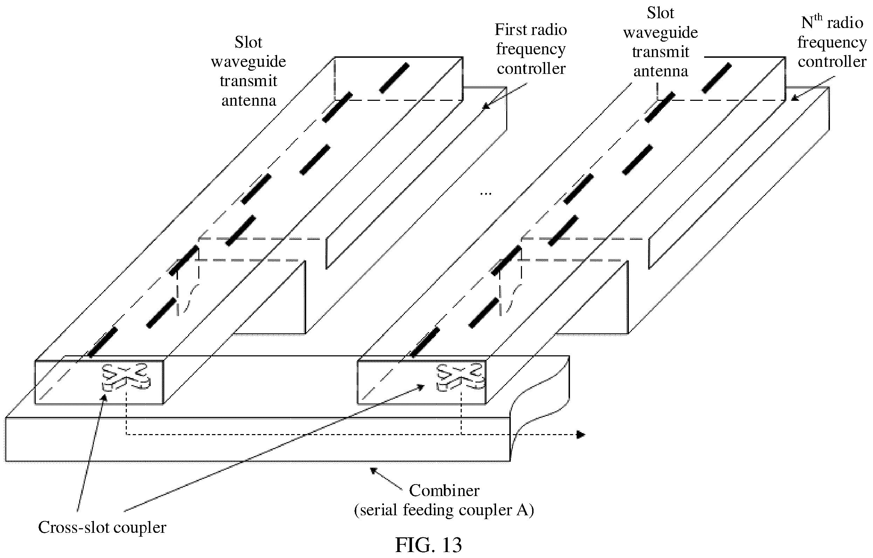

FIG. 13 is a diagram of a structure of an antenna apparatus according to an embodiment of this application.

As shown in FIG. 13, the antenna apparatus includes a plurality of radio frequency controllers, and the radio frequency controllers specifically include but are not limited to a first radio frequency controller, an N^{th} radio frequency controller, and the like, where N is an integer greater than 1.

In the antenna apparatus in this embodiment of this application, a slot waveguide antenna is used, to radiate energy of a service signal to an air interface. It may be understood that the slot waveguide antenna may correspond to the transmit antenna Tx1 and/or the transmit antenna Tx2 in FIG. 4.

In the antenna apparatus in this embodiment of this application, a cross-slot coupler is used, to tap some energy from a transmit channel of a service signal as a calibration signal, for loopback transmission of the calibration signal. For example, the cross-slot coupler is used to tap some energy from a transmit channel of a service signal of the first radio frequency controller as a calibration signal, and transmit the calibration signal to a combiner (a serial feeding coupler A); and the cross-slot coupler is used to tap some energy from a transmit channel of a service signal of the N^{th} radio frequency controller as a calibration signal, and transmit the calibration signal to the combiner (the serial feeding coupler A). It may be understood that the cross-slot coupler may correspond to the first coupler 401 and/or the second coupler 402 in FIG. 6.

In the antenna apparatus in this embodiment of this application, the serial feeding coupler is used as the combiner, and is configured to: combine calibration signals and transmit the calibration signals to a delay unit, so that complexity, an insertion loss, and a corresponding requirement for isolation of a calibration system can be reduced. It may be understood that the serial feeding coupler may correspond to the combiner 501 in FIG. 8.

It may be understood that the antenna apparatus in this embodiment of this application may include a plurality of radio frequency controllers. For brevity of illustrations and text descriptions, FIG. 10 shows only the first radio frequency controller and the N^{th} radio frequency controller. This does not constitute a limitation on this embodiment of this application.

According to embodiments of this application, the cross-slot coupler is used to tap some energy from a service transmit channel as a calibration signal for loopback transmission, and a service transmit channel and a service receive channel of each radio frequency controller is multiplexed, without depending on a dedicated calibration channel, so that a requirement for channel calibration between different chips can be supported. In addition, the combiner (the serial feeding coupler A) is used to combine calibration signals in the system to the delay unit, to delay transmission of each calibration signal, so that an arrival time of the calibration signal is different from an arrival time of leakage energy corresponding to a service signal on receive ports of the radio frequency controllers, and the calibration signal and the leakage energy corresponding to the service signal are distinguished in terms of time, thereby improving an SINR of the calibration signal.

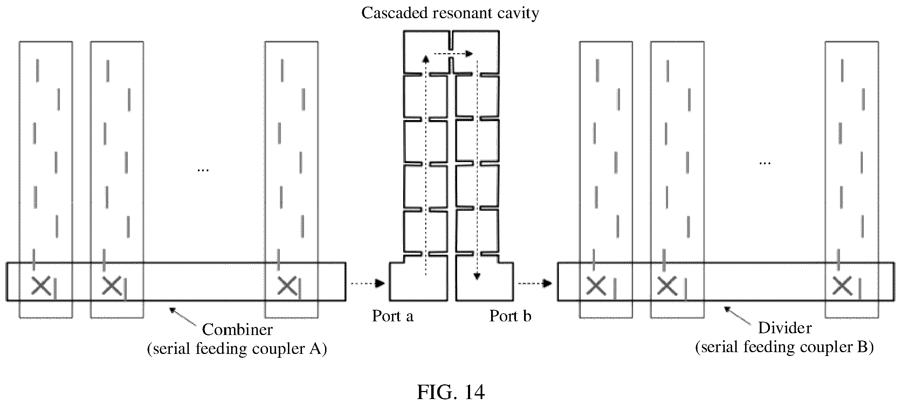

FIG. 14 is a diagram of a structure of an antenna apparatus according to an embodiment of this application.

As shown in FIG. 14, the antenna apparatus includes but is not limited to a combiner (a serial feeding coupler A), a cascaded resonant cavity, and a divider (a serial feeding coupler B).

The combiner (the serial feeding coupler A) uses a serial feeding manner, and is configured to combine calibration signals received from cross-slot couplers of radio frequency controllers, and transmit the calibration signals to the cascaded resonant cavity.

The cascaded resonant cavity in this embodiment of this application is a channel that can be used to transmit a signal and that is formed by cascading N resonant cavities (a resonant cavity 1, a resonant cavity 2, ..., and a resonant cavity N), and is configured to delay transmission of each calibration signal, so that a larger transmission delay can be obtained in limited space by using a group velocity change of a radio frequency signal near a resonant point. For details, refer to the descriptions of FIG. 5B. Details are not described herein again.

The cascaded resonant cavity transmits the calibration signal to the divider (the serial feeding coupler B) in a delayed manner. The divider (the serial feeding coupler B) uses a serial feeding manner, and is configured to divide the received calibration signal into a plurality of sub-signals, and output the plurality of sub-signals to the radio frequency controllers through output ports, to implement loopback transmission of each calibration signal in a system, thereby implementing intra-system calibration.

It may be understood that the combiner (the serial feeding coupler A) in this embodiment of this application may correspond to the combiner 501 in FIG. 8, the cascaded resonant cavity may correspond to the delay unit 30 in FIG. 8, and the divider (the serial feeding coupler B) may correspond to the divider 502 in FIG. 8.

According to embodiments of this application, a transmission delay is generated when each calibration signal passes through a delay unit, so that the looped-back calibration signal is distinguished from leakage energy between a service transmit channel and a service receive channel in terms of time, thereby improving an SINR of the looped-back calibration signal, reducing a requirement for isolation between the service transmit channel and the service receive channel, and implementing a compact design and high reliability of the apparatus. In addition, the service transmit channel and the service receive channel of each radio frequency controller is multiplexed, without depending on a dedicated calibration channel, so that a requirement for channel calibration between different chips can be supported.

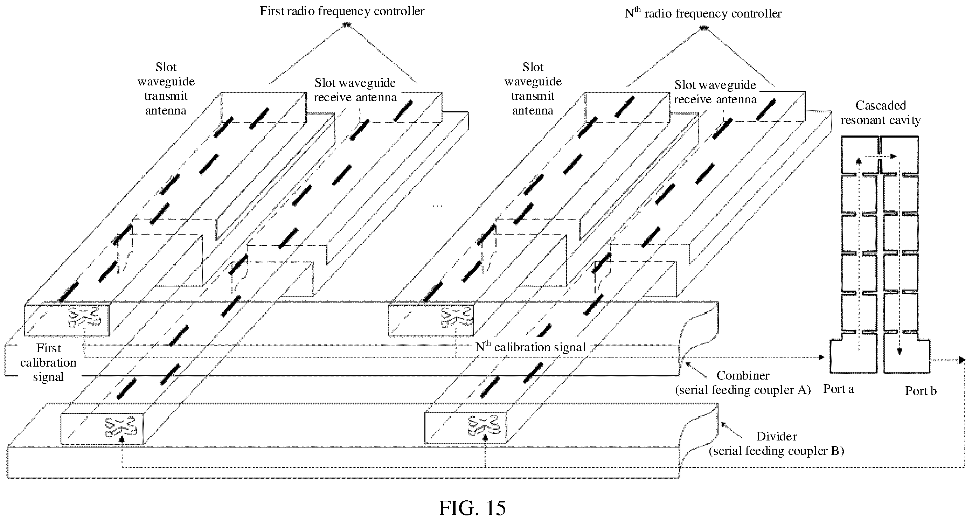

FIG. 15 is a diagram of a structure of an antenna apparatus according to an embodiment of this application.

As shown in FIG. 15, the antenna apparatus includes a plurality of radio frequency controllers, and the radio frequency controllers specifically include but are not limited to a first radio frequency controller, an N^{th} radio frequency controller, and the like, where N is an integer greater than 1. The antenna apparatus further includes a combiner (a serial feeding coupler A), a cascaded resonant cavity, and a divider (a serial feeding coupler B).

The antenna apparatus in this embodiment of this application may be understood as a combination of the antenna apparatuses shown in FIG. 13 and FIG. 14.

A cross-slot coupler in the first radio frequency controller taps some energy from a transmit channel of a service signal as a first calibration signal, and outputs the first calibration signal from a calibration port to a receive port of the combiner (the serial feeding coupler A). By analogy, a cross-slot coupler in the N^{th} radio frequency controller taps some energy from the transmit channel of the service signal as an N^{th} calibration signal, and outputs the N^{th} calibration signal from a calibration port to a receive port of the combiner (the serial feeding coupler A).

The combiner (the serial feeding coupler A) is configured to combine calibration signals (including but not limited to the first calibration signal and the N^{th} calibration signal), and transmit the calibration signals to the cascaded resonant cavity through a port a of the cascaded resonant cavity.

The cascaded resonant cavity is configured to: delay transmission of each calibration signal, and transmit the calibration signal to the divider (the serial feeding coupler B) in a delayed manner through a port b.

It may be understood that the port a of the cascaded resonant cavity may correspond to the input port of the delay unit 30 in FIG. 8, and the port b of the cascaded resonant cavity may correspond to the output port of the delay unit 30 in FIG. 8.

The divider (the serial feeding coupler B) is configured to: divide the received calibration signal into a plurality of sub-signals, separately output the plurality of sub-signals from output ports, and transmit the plurality of sub-signals to radio frequency controllers through cross-slot couplers of the radio frequency controllers, to implement loopback transmission of each calibration signal in a system, thereby implementing intra-system calibration. For example, the divider (the serial feeding coupler B) divides the received first calibration signal into N sub-signals, and the N sub-signals are separately output to a calibration port of the first radio frequency controller, to be transmitted to the first radio frequency controller, and are output to a calibration port of the N^{th} radio frequency controller, to be transmitted to the N^{th} radio frequency controller. For another example, the divider (the serial feeding coupler B) divides the received N^{th} calibration signal into N sub-signals, and the N sub-signals are separately output to the calibration port of the first radio frequency controller, to be transmitted to the first radio frequency controller, and are output to the calibration port of the N^{th} radio frequency controller, to be transmitted to the N^{th} radio frequency controller.

According to embodiments of this application, intra-system calibration may be implemented by multiplexing a service transmit channel and a service receive channel of each radio frequency controller for loopback transmission of a calibration signal, without depending on a dedicated calibration channel, so that a requirement for channel calibration between different chips can be supported. In addition, the delay unit is designed to delay transmission of each calibration signal, so that a looped-back calibration signal is distinguished from leakage energy between the service transmit channel and the service receive channel in terms of time, thereby reducing a requirement for isolation between the service transmit channel and the service receive channel, and implementing a compact design and high reliability of the apparatus.

It may be understood that the antenna apparatuses in FIG. 10 to FIG. 15 are merely used as several examples of antenna apparatuses for description, and do not constitute a limitation on this application. An obtained combined structure of the antenna apparatus based on a proper deformation of the structure of the antenna apparatus shown in any one of FIG. 4 to FIG. 9 falls within the protection scope of this application.

This application provides a chip, where the chip includes the antenna apparatus provided in this application.

This application provides a radar or a radar system, where the radar or the radar system includes the antenna apparatus or the foregoing chip provided in this application. It should be noted that there may be a plurality of smart sensors integrated with sensors. When the smart sensor includes a millimeter-wave detection function, the smart sensor may also be referred to as a millimeter-wave radar system or a millimeter-wave radar system.

This application provides a terminal device, where the terminal device includes the antenna apparatus provided in this application. For example, the terminal device may be a transportation tool, for example, a transportation means used in any possible scenario, for example, a vehicle, a truck, an aircraft, an uncrewed aerial vehicle, a slow transport vehicle, a spacecraft, or a ship, or may be any device that can carry a millimeter-wave detection apparatus, for example, a surveying and mapping device. One or more antenna apparatuses provided in this application are deployed on the terminal device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna apparatus, comprising a first radio frequency controller, a second radio frequency controller, and a delay unit, wherein
the first radio frequency controller is configured to generate a first signal, wherein the first radio frequency controller comprises at least one first transmit port and/or at least one first receive port;
the second radio frequency controller is configured to generate a second signal, wherein the second radio frequency controller comprises at least one second transmit port and/or at least one second receive port;
a first radio frequency signal corresponding to the first signal is transmitted to an air interface through an antenna corresponding to the first transmit port, wherein the first radio frequency signal is used to detect a target;
a first calibration signal corresponding to the first signal is separately transmitted to the first receive port and the second receive port through the delay unit;
a second radio frequency signal corresponding to the second signal is transmitted to an air interface through an antenna corresponding to the second transmit port, wherein the second radio frequency signal is used to detect the target;
a second calibration signal corresponding to the second signal is separately transmitted to the first receive port and the second receive port through the delay unit; and
the delay unit is configured to delay transmission of the first calibration signal and the second calibration signal.

2. The antenna apparatus according to claim 1, wherein the delay unit comprises at least one of the following: a serpentine waveguide and a cascaded resonant cavity.

3. The antenna apparatus according to claim 1 or 2, wherein the antenna apparatus further comprises:
a first coupler and a second coupler, wherein
the first coupler is disposed on a transmit channel of the first radio frequency controller, and the second coupler is disposed on a transmit channel of the second radio frequency controller;
the first coupler is configured to tap the first calibration signal from the first signal, wherein a signal left after tapping of the first signal is the first radio frequency signal; and
the second coupler is configured to tap the second calibration signal from the second signal, wherein a signal left after tapping of the second signal is the second radio frequency signal.

4. The antenna apparatus according to claim 3, wherein the antenna apparatus further comprises:
a third coupler and a fourth coupler, wherein
the third coupler is disposed on a receive channel of the first radio frequency controller, and the fourth coupler is disposed on a receive channel of the second radio frequency controller;
the third coupler is configured to couple the first calibration signal and the second calibration signal to the first radio frequency controller; and
the fourth coupler is configured to couple the first calibration signal and the second calibration signal to the second radio frequency controller.

5. The antenna apparatus according to claim 3 or 4, wherein the first coupler and/or the second coupler and/or the third coupler and/or the fourth coupler comprise/comprises at least one of the following: a small-aperture directional coupler and a cross-slot coupler.

6. The antenna apparatus according to any one of claims 1 to 5, wherein the antenna apparatus further comprises:
a combiner and a divider, wherein
the combiner is configured to combine the first calibration signal and the second calibration signal to the delay unit; and
the divider is configured to: divide the first calibration signal that passes through the delay unit to the first receive port and the second receive port, and divide the second calibration signal that passes through the delay unit to the first receive port and the second receive port.

7. The antenna apparatus according to claim 6, wherein the first calibration signal and the second calibration signal that pass through the combiner are a time division signal, a frequency division signal, or a code division signal.

8. The antenna apparatus according to claim 6 or 7, wherein the combiner and/or the divider comprise/comprises at least one of the following: a waveguide bridge and a serial feeding coupler.

9. The antenna apparatus according to any one of claims 1 to 8, wherein the first radio frequency controller and/or the second radio frequency controller comprise/comprises a monolithic microwave integrated circuit MMIC.

10. The antenna apparatus according to any one of claims 1 to 9, wherein the antenna apparatus comprises a plurality of first radio frequency controllers and/or a plurality of second radio frequency controllers.

11. The antenna apparatus according to any one of claims 1 to 10, wherein an arrival time of the first calibration signal is different from an arrival time of leakage energy corresponding to the first signal at the receive port, and an arrival time of the second calibration signal is different from an arrival time of leakage energy corresponding to the second signal at the receive port.

12. The antenna apparatus according to any one of claims 1 to 11, wherein the antenna apparatus further comprises a processing unit, wherein
the processing unit is configured to obtain a target transmit parameter based on a transmit parameter of the first calibration signal and a transmit parameter of the second calibration signal, wherein the target transmit parameter comprises a target amplitude and/or a target phase of a signal; and
the processing unit is further configured to: based on the target transmit parameter, scale an amplitude of the first calibration signal and an amplitude of the second calibration signal to the target amplitude, and/or align a phase of the first calibration signal and a phase of the second calibration signal with the target phase.

13. A radar, wherein the radar comprises the antenna apparatus according to any one of claims 1 to 12.

14. A terminal device, wherein the terminal device comprises the antenna apparatus according to any one of claims 1 to 12, or the radar according to claim 13.

15. A vehicle, wherein the vehicle comprises the antenna apparatus according to any one of claims 1 to 12, or the radar according to claim 13.
